# EUROPÄISCHE PATENTANMELDUNG

(11) **EP 4 847 317 A1**
(43) Veröffentlichungstag der Anmeldung: **02.12.2026**
(21) Anmeldenummer: 25179587.8
(22) Anmeldetag: 28.05.2025
(51) Int. Cl.: B60Q 1/12, B60Q 1/14, F21W 103/60, F21W 102/155, F21W 102/19, F21W 102/13, F21S 41/153, F21S 41/663

(54) **BELEUCHTUNGSANORDNUNG FÜR EIN FAHRZEUG UND VERFAHREN ZUM BETREIBEN EINER BELEUCHTUNGSANORDNUNG**

(71) Anmelder: VOLKSWAGEN AG, 38440 Wolfsburg (DE)
(72) Erfinder: Lampe, Sebastian, 38440 Wolfsburg (DE); Thiel, Alexander, 38440 Wolfsburg (DE); Kreipe, Bernhard, 38440 Wolfsburg (DE)

(57) **Zusammenfassung**

Die Erfindung betrifft eine Beleuchtungsanordnung (1) für ein Fahrzeug (30), umfassend zwei Scheinwerfer (2, 3) und mindestens eine Steuereinrichtung (8), wobei ein erster der Scheinwerfer (2) eine Vorfeld-Lichtquelle (4) und eine hochaufgelöste Lichtquelle (5) umfasst, wobei ein zweiter der Scheinwerfer (3) eine Vorfeld-Lichtquelle (4) und eine Zeilen-Lichtquelle (6) umfasst, wobei jede der Lichtquellen (4-7) dazu eingerichtet ist, einen jeweils vorgegebenen Ausleuchtbereich (14-21) vor der Beleuchtungsanordnung (1) zu beleuchten, wobei die hochaufgelöste Lichtquelle (5) in einem Raster angeordnete, einzeln und/oder gruppenweise ansteuerbare Lichtpunkte umfasst, wobei die Zeilen-Lichtquelle (6) in mindestens einer Zeile angeordnete, einzeln und/oder gruppenweise ansteuerbare Lichtelemente umfasst, wobei die Vorfeld-Lichtquellen (4) dazu eingerichtet sind, den Ausleuchtbereich eines Abblendlichts (22) zu beleuchten, wobei die mindestens eine Steuereinrichtung (8) dazu eingerichtet ist, je nach einem Betriebszustand die Lichtquellen (4-7) und/oder Lichtpunkte und/oder Lichtelemente derart anzusteuern, dass der jeweilige Ausleuchtbereich eines Abblendlichts (22) und/oder eines Kurvenlichts (23) und/oder eines Fernlichts (24) beleuchtet wird und/oder eine hochaufgelöste Projektion bereitgestellt wird.

## Beschreibung

Die Erfindung betrifft eine Beleuchtungsanordnung für ein Fahrzeug und ein Verfahren zum Betreiben einer Beleuchtungsanordnung.

Fahrzeuge, insbesondere Kraftfahrzeuge, sind im Allgemeinen mit Scheinwerfern ausgestattet, welche dazu eingerichtet sind, verschiedene Lichtfunktionen, wie beispielsweise ein Abblendlicht und/oder ein Fernlicht, bereitzustellen. Die Scheinwerfer moderner Fahrzeuge umfassen dabei oft spezielle hochaufgelöste Lichtquellen, welche durch eine große Anzahl ansteuerbarer Pixel zusätzliche Lichtfunktionen, wie beispielsweise ein hochaufgelöstes Projektionsbild und/oder ein maskiertes Fernlicht, bereitstellen können. Diese hochaufgelösten Lichtquellen haben aber verhältnismäßig hohe Kosten.

Beleuchtungsanordnungen sind beispielsweise aus der DE 10 2007 060 399 A1 und der US 11 585 509 B2 bekannt.

Der Erfindung liegt die Aufgabe zu Grunde, eine Beleuchtungsanordnung für ein Fahrzeug und ein Verfahren zum Betreiben einer Beleuchtungsanordnung, insbesondere im Hinblick auf einen einfacheren Aufbau, zu verbessern, wobei mit der Lösung insbesondere eine große Vielfalt an möglichen Lichtfunktionen bereitgestellt werden soll.

Die Aufgabe wird erfindungsgemäß durch eine Beleuchtungsanordnung mit den Merkmalen des Patentanspruchs 1 und ein Verfahren mit den Merkmalen des Patentanspruchs 11 gelöst. Vorteilhafte Ausgestaltungen der Erfindung ergeben sich aus den Unteransprüchen.

Insbesondere wird eine Beleuchtungsanordnung für ein Fahrzeug geschaffen, umfassend zwei Scheinwerfer und mindestens eine Steuereinrichtung, wobei ein erster der Scheinwerfer eine Vorfeld-Lichtquelle und eine hochaufgelöste Lichtquelle umfasst, wobei ein zweiter der Scheinwerfer eine Vorfeld-Lichtquelle und eine Zeilen-Lichtquelle umfasst, wobei jede der Lichtquellen dazu eingerichtet ist, einen jeweils vorgegebenen Ausleuchtbereich vor der Beleuchtungsanordnung zu beleuchten, wobei die hochaufgelöste Lichtquelle in einem Raster angeordnete, einzeln und/oder gruppenweise ansteuerbare Lichtpunkte umfasst, wobei die Zeilen-Lichtquelle in mindestens einer Zeile angeordnete, einzeln und/oder gruppenweise ansteuerbare Lichtelemente umfasst, wobei die Vorfeld-Lichtquellen dazu eingerichtet sind, den Ausleuchtbereich eines Abblendlichts zu beleuchten, wobei die mindestens eine Steuereinrichtung dazu eingerichtet ist, je nach einem Betriebszustand die Lichtquellen und/oder Lichtpunkte und/oder Lichtelemente derart anzusteuern, dass der jeweilige Ausleuchtbereich eines Abblendlichts und/oder eines Kurvenlichts und/oder eines Fernlichts beleuchtet wird und/oder eine hochaufgelöste Projektion bereitgestellt wird.

Ferner wird insbesondere ein Verfahren zum Betreiben einer Beleuchtungsanordnung für ein Fahrzeug zur Verfügung gestellt, umfassend: Betreiben von zwei Scheinwerfern mittels mindestens einer Steuereinrichtung, wobei ein erster der Scheinwerfer eine Vorfeld-Lichtquelle und eine hochaufgelöste Lichtquelle mit in einem Raster angeordneten Lichtpunkten umfasst und wobei ein zweiter der Scheinwerfer eine Vorfeld-Lichtquelle und eine Zeilen-Lichtquelle mit in mindestens einer Zeile angeordneten Lichtelementen umfasst, wobei jede der Lichtquellen dazu eingerichtet ist, einen jeweils vorgegebenen Ausleuchtbereich vor dem Fahrzeug zu beleuchten, wobei die Lichtquellen und/oder die Lichtpunkte und/oder die Lichtelemente je nach einem Betriebszustand einzeln und/oder gruppenweise angesteuert werden, sodass der jeweilige Ausleuchtbereich eines Abblendlichts und/oder eines Kurvenlichts und/oder eines Fernlichts beleuchtet wird und/oder eine hochaufgelöste Projektion bereitgestellt wird.

Die Beleuchtungsanordnung und das Verfahren ermöglichen es, verschiedene Lichtfunktionen durch die Scheinwerfer bereitzustellen und gleichzeitig die Kosten der Beleuchtungsanordnung im Vergleich zum Stand der Technik zu senken. Die Beleuchtungsanordnung umfasst zwei Scheinwerfer und mindestens eine Steuereinrichtung. Die Scheinwerfer umfassen je eine Vorfeld-Lichtquelle. Ein erster der Scheinwerfer umfasst ferner eine hochaufgelöste Lichtquelle. Die hochaufgelöste Lichtquelle umfasst in einem Raster angeordnete, einzeln und/oder gruppenweise ansteuerbare Lichtpunkte. Ein zweiter der Scheinwerfer umfasst ferner eine Zeilen-Lichtquelle. Die Zeilen-Lichtquelle umfasst in mindestens einer Zeile angeordnete, einzeln und/oder gruppenweise ansteuerbare Lichtelemente. Insbesondere ist die Anzahl an Lichtpunkten der hochaufgelösten Lichtquelle größer als die Anzahl an Lichtelementen der Zeilen-Lichtquelle, insbesondere mindestens um den Faktor 50, bevorzugt insbesondere mindestens um den Faktor 500. Jede der Lichtquellen ist dazu eingerichtet, einen jeweils vorgegebenen Ausleuchtbereich vor der Beleuchtungsanordnung zu beleuchten. Die mindestens eine Steuereinrichtung steuert die Lichtquellen und/oder die Lichtpunkte und/oder die Lichtelemente in Abhängigkeit eines Betriebszustands an. Dadurch wird je nach Betriebszustand ein vorgegebener Ausleuchtbereich eines Abblendlichts und/oder eines Kurvenlichts und/oder eines Fernlichts beleuchtet und/oder eine hochaufgelöste Projektion bereitgestellt.

Eine Grundidee der Erfindung ist es, nur in einem der beiden Scheinwerfer eine hochaufgelöste Lichtquelle vorzusehen. In dem anderen der Scheinwerfer ist eine Zeilen-Lichtquelle vorgesehen. Da die Zeilen-Lichtquelle technisch einfacher als die hochaufgelöste Lichtquelle ausgestaltet ist, können dadurch Kosten gesenkt werden. Insbesondere kann ein gröberes Lichtbild, welches durch Ansteuern der Lichtelemente der Zeilen-Lichtquelle bereitgestellt wird, durch ein feineres Lichtbild ergänzt werden, welches durch Ansteuern der Lichtpunkte der hochaufgelösten Lichtquelle bereitgestellt wird. Durch gezieltes Ansteuern der Scheinwerfer ist es dadurch möglich, alle benötigten Ausleuchtbereiche zu beleuchten. Ferner wird insbesondere ein gezieltes Aussparen bestimmter Bereiche aus dem Lichtbild ermöglicht. Insbesondere wird eine benötigte Lichtstärke in allen Ausleuchtbereichen bereitgestellt. Dadurch bleibt trotz gesenkten Kosten eine Funktionsvielfalt erhalten.

Die Beleuchtungsanordnung ist dazu vorgesehen, in einem Fahrzeug, insbesondere einem Kraftfahrzeug, eingesetzt zu werden.

Die Beleuchtungsanordnung umfasst zwei Scheinwerfer. Ein Scheinwerfer ist insbesondere eine Leuchte, welche Licht insbesondere in einer Hauptrichtung bereitstellt. Jeder der Scheinwerfer umfasst mindestens zwei Lichtquellen, welche auch als Lichtmodule bezeichnet werden können. Die Scheinwerfer sind insbesondere an einer Fahrzeugvorderseite angeordnet. Ferner ist einer der Scheinwerfer insbesondere an einer linken Seite der Fahrzeugvorderseite und ein anderer der Scheinwerfer an einer rechten Seite der Fahrzeugvorderseite angeordnet.

Eine Lichtquelle ist insbesondere eine Vorrichtung, welche Licht in einem für ein menschliches Sehvermögen sichtbaren Wellenlängenbereich ausstrahlt, oder ein Anordnung solcher Vorrichtungen. Insbesondere kann eine Lichtquelle mehrere solcher Vorrichtungen umfassen.

Jeder der Scheinwerfer umfasst je eine Vorfeld-Lichtquelle. Die Vorfeld-Lichtquelle ist eine Lichtquelle, welche insbesondere dazu eingerichtet ist, einen Ausleuchtbereich eines Abblendlichts zu beleuchten. Der Ausleuchtbereich eines Abblendlichts ist insbesondere ein Bereich direkt vor der Beleuchtungsanordnung. Insbesondere kann die Vorfeld-Lichtquelle mindestens eine Leuchtdiode und/oder mindestens eine Halogenlampe umfassen.

Ein erster der Scheinwerfer umfasst eine hochaufgelöste Lichtquelle. Die hochaufgelöste Lichtquelle umfasst eine Vielzahl von Lichtpunkten. Die Lichtpunkte sind einzeln oder gruppenweise ansteuerbar. Die Lichtpunkte sind in einem Raster angeordnet. Insbesondere können die Lichtpunkte mittels Spiegeln einer Mikrospiegelaktor-Anordnung (englisch Digital Micromirror Device, DMD), mittels Pixeln einer Flüssigkristallmatrix (englisch liquid-crystal display, LCD) oder mittels Leuchtdioden (LED), insbesondere mittels mikropixelierten LEDs oder Mikro-LEDs, bereitgestellt werden.

Ein zweiter der Scheinwerfer umfasst eine Zeilen-Lichtquelle. Die Zeilen-Lichtquelle umfasst mehrere Lichtelemente. Die Lichtelemente sind einzeln oder gruppenweise ansteuerbar. Die Lichtelemente sind in mindestens einer Zeile angeordnet. Die Zeile verläuft im Betrieb insbesondere horizontal. Insbesondere sind die Lichtpunkte einzelne Leuchtdioden oder Gruppen von Leuchtdioden. Insbesondere ist ein Ausleuchtbereich eines Lichtelements der Zeilen-Lichtquelle größer als ein Ausleuchtbereich eines Lichtpunkts der hochaufgelösten Lichtquelle. Insbesondere ist eine Anzahl der Lichtelemente der Zeilen-Lichtquelle geringer als eine Anzahl der Lichtpunkte der hochaufgelösten Lichtquelle. Insbesondere überlappt ein Ausleuchtbereich der hochaufgelösten Lichtquelle mit einem Ausleuchtbereich der Zeilen-Lichtquelle.

Ein Ausleuchtbereich ist insbesondere ein Raumwinkel oder eine Menge von Raumwinkeln vor der Beleuchtungsanordnung. Insbesondere wird der Ausleuchtbereich von mindestens einer Lichtquelle beleuchtet oder mindestens eine Lichtquelle ist dazu eingerichtet, den Ausleuchtbereich zu beleuchten. Insbesondere ist der Ausleuchtbereich einer Lichtquelle derjenige Raumwinkel, welcher von der Lichtquelle beleuchtet wird, wenn alle ansteuerbaren Teile der Lichtquelle aktiviert werden. Insbesondere ist der Ausleuchtbereich einer Lichtfunktion der vorgesehene Raumwinkel, welcher zur Erfüllung der Lichtfunktion beleuchtet sein muss. Durch ein Ansteuern der Lichtquellen und/oder Lichtelemente und/oder Lichtpunkte je nach einem Betriebszustand, kann ein vorgegebener Ausleuchtbereich oder ein Teilbereich hiervon beleuchtet werden. Insbesondere können dadurch verschiedene Lichtfunktionen ermöglicht werden. Insbesondere kann durch ein Deaktivieren bestimmter Lichtquellen und/oder Lichtpunkte und/oder Lichtelemente ein Raumwinkelbereich unbeleuchtet bleiben, selbst wenn er von beleuchteten Bereichen umgeben ist. Dadurch können insbesondere maskierte Lichtfunktionen bereitgestellt werden. Insbesondere kann durch ein gezieltes Ansteuern der Lichtpunkte und/oder Lichtelemente der Ausleuchtbereich derart geändert werden, dass ein Unterschied zum vorherigen Betriebszustand für ein menschliches Sehvermögen nicht oder nur schwer wahrnehmbar ist. Dadurch kann insbesondere eine kontinuierliche Veränderung des Ausleuchtbereichs ermöglicht werden. Dadurch können insbesondere dynamische Lichtfunktionen bereitgestellt werden.

Ein Betriebszustand korrespondiert hierbei insbesondere mit einer Bereitstellung einer Lichtfunktion oder einer Kombination von mehreren Lichtfunktionen. Insbesondere wird durch den Betriebszustand für jeden ansteuerbaren Bestandteil der Lichtquellen ein Ansteuerparameter vorgegeben, welcher mit einem jeweiligen Helligkeitswert des ansteuerbaren Bestandteils korrespondiert. Insbesondere ist hierfür für jeden Betriebszustand ein Satz von Ansteuerparametern hinterlegt, insbesondere in der mindestens einen Steuereinrichtung, und kann gemäß dem gewünschten Betriebszustand abgerufen werden.

Ein Abblendlicht ist insbesondere eine Lichtfunktion, welche einen Bereich direkt vor der Beleuchtungsanordnung beleuchtet. Insbesondere dient das Abblendlicht zur Beleuchtung einer Fahrbahn vor einem Fahrzeug, in welchem die Beleuchtungsanordnung verbaut ist. Der Ausleuchtbereich des Abblendlichts liegt insbesondere unterhalb einer horizontalen Ebene durch mindestens einen der Scheinwerfer. Insbesondere liegt der Ausleuchtbereich des Abblendlichts unterhalb einer vorgegebenen Hell-Dunkel-Grenze. Die Hell-Dunkel-Grenze ist insbesondere eine vorgegebene Grenze, oberhalb derer eine Blendung anderer Verkehrsteilnehmer vermieden wird.

Ein Kurvenlicht ist insbesondere eine Lichtfunktion, welche einen Bereich schräg vor der Beleuchtungsanordnung beleuchtet. Insbesondere beleuchtet das Kurvenlicht eine Fahrbahn schräg vor einem Fahrzeug, in welchem die Beleuchtungsanordnung verbaut ist. Insbesondere vergrößert das Kurvenlicht ein beleuchtetes Sichtfeld in einer Kurvenbewegung des Fahrzeugs in Richtung einer Kurvenkrümmung. Das Kurvenlicht kann insbesondere ein dynamisches oder ein statisches Kurvenlicht sein.

Ein Fernlicht ist insbesondere eine Lichtfunktion, welche einen Bereich vor der Beleuchtungsanordnung beleuchtet. Insbesondere dient das Fernlicht dazu, eine Sicht eines Fahrers über eine Distanz, welche den Ausleuchtbereich des Abblendlichts übersteigt, zu verbessern. Insbesondere dient das Fernlicht der Beleuchtung der Fahrbahn und/oder von Verkehrszeichen. Insbesondere überlappen die Ausleuchtbereiche der hochaufgelösten Lichtquelle und der Zeilen-Lichtquelle mit einem Ausleuchtbereich des Fernlichts. Der Ausleuchtbereich des Fernlichts liegt insbesondere zumindest teilweise oberhalb der Hell-Dunkel-Grenze. Insbesondere kann das Fernlicht derart maskiert sein, dass nur ein vorgegebener Bereich im Ausleuchtbereich des Fernlichts beleuchtet wird, während ein anderer vorgegebener Bereich im Ausleuchtbereich des Fernlichts maskiert wird. Dadurch kann insbesondere ein Blenden anderer Verkehrsteilnehmer verhindert werden, ohne ein beleuchtetes Sichtfeld eines Fahrers maßgeblich zu verkleinern.

Eine hochaufgelöste Projektion ist insbesondere eine Lichtfunktion, durch welche ein Lichtbild mit hoher Auslösung auf einem Bereich vor der Beleuchtungsanordnung bereitgestellt wird, insbesondere auf einen horizontalen Bereich, beispielsweise eine Straße vor dem Fahrzeug.. Insbesondere können durch die hochaufgelöste Projektion Hinweise oder Warnmeldungen auf der Fahrbahn bereitgestellt werden.

Teile der Beleuchtungsanordnung, insbesondere die mindestens eine Steuereinrichtung, können einzeln oder zusammengefasst als eine Kombination von Hardware und Software ausgebildet sein, beispielsweise als Programmcode, der auf einer Recheneinrichtung, insbesondere einem Mikrocontroller oder Mikroprozessor, ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) und/oder Graphikprozessor (GPU) und/oder Digitaler Signalprozessor (DSP) ausgebildet sind. Die mindestens eine Steuereinrichtung kann insbesondere mindestens eine Recheneinrichtung und mindestens einen Speicher umfassen. Es können mehrere Steuereinrichtungen vorgesehen sein, welche verschiedene Teile der Beleuchtungseinrichtung ansteuern. Insbesondere kann vorgesehen sein, dass jede der Lichtquellen je von einer separaten Steuereinrichtung angesteuert wird. Ferner kann eine einzige Steuereinrichtung vorgesehen sein, welche sämtliche Lichtquellen ansteuert.

In einer Ausführungsform ist vorgesehen, dass die Zeilen-Lichtquelle des zweiten Scheinwerfers zwei Zeilen umfasst. Dadurch kann der Ausleuchtbereich der Zeilen-Lichtquelle vergrößert werden, insbesondere in einer vertikalen Richtung. Ferner kann durch eine erhöhte Anzahl an Lichtelementen eine feinere Auflösung der Lichtquelle erreicht werden. Dadurch kann insbesondere eine Genauigkeit bzw. Auflösung einer Maskierung verbessert werden. Ferner kann durch ein Vergrößern der Anzahl an Lichtelementen eine Lichtstärke erhöht werden.

In einer Ausführungsform ist vorgesehen, dass mindestens einer der Scheinwerfer ein Kombinationsmodul umfasst, welches die Vorfeld-Lichtquelle umfasst und welches ferner dazu eingerichtet ist, einen Ausleuchtbereich eines Fernlichts zu beleuchten. Insbesondere kann dadurch eine Lichtstärke des Fernlichts erhöht werden.

In einer Ausführungsform ist vorgesehen, dass die hochaufgelöste Lichtquelle und/oder die Zeilen-Lichtquelle derart angeordnet sind, dass eine Lichtverteilung, welche durch ein Aktivieren aller Lichtpunkte und/oder aller Lichtelemente entsteht, in einem vorgegebenen horizontalen Auftreffbereich des Lichts symmetrisch in Bezug auf eine Mittelebene zwischen den Scheinwerfern ist. Die Mittelebene ist insbesondere eine vertikale Ebene mit gleichem Abstand zu beiden Scheinwerfern. Ist die Beleuchtungsanordnung in einem Fahrzeug angeordnet, ist die Mittelebene insbesondere eine Fahrzeuglängsmittelebene. Insbesondere wird dadurch eine Symmetrie der bereitgestellten hochaufgelösten Projektion zum Sichtfeld eines Fahrers ermöglicht, obwohl nur einer der Scheinwerfer eine hochaufgelöste Lichtquelle umfasst. Insbesondere sind die hochaufgelöste Lichtquelle und/oder die Zeilen-Lichtquelle hierzu in Bezug auf die Mittelebene um einen Winkel gedreht angeordnet.

In einer Ausführungsform ist vorgesehen, dass mindestens eine der Vorfeld-Lichtquellen einzeln und/oder gruppenweise ansteuerbare Segmente umfasst, wobei der vorgegebene Ausleuchtbereich mindestens eines der Segmente mit dem vorgegebenen Ausleuchtbereich der hochaufgelösten Lichtquelle überlappt. Dadurch kann ein Kontrast einer durch die hochaufgelöste Lichtquelle bereitgestellten Lichtfunktion im Verhältnis zu einem restlichen Lichtbild erhöht werden. Insbesondere kann das Segment, dessen Ausleuchtbereich mit einem Ausleuchtbereich der hochaufgelösten Projektion überlappt, in einem Betriebszustand hierzu gedimmt oder deaktiviert werden.

In einer Ausführungsform ist vorgesehen, dass die hochaufgelöste Lichtquelle und mindestens eine der Zeilen der Zeilen-Lichtquelle und/oder das Kombinationsmodul dazu eingerichtet sind, in mindestens einem der Betriebszustände zusammen ein bereichsweise maskiertes oder maskierbares Fernlicht bereitzustellen, wobei die mindestens eine Steuereinrichtung dazu eingerichtet ist, die Lichtquellen im vorgenannten mindestens einen Betriebszustand entsprechend anzusteuern. Insbesondere kann durch ein maskiertes Fernlicht ein Blenden anderer Verkehrsteilnehmer verhindert werden.

In einer Ausführungsform ist vorgesehen, dass die hochaufgelöste Lichtquelle und mindestens eine der Zeilen der Zeilen-Lichtquelle dazu eingerichtet sind, in mindestens einem der Betriebszustände ein dynamisches Kurvenlicht bereitzustellen, wobei die mindestens eine Steuereinrichtung dazu eingerichtet ist, die Zeilen-Lichtquelle im vorgenannten mindestens einen Betriebszustand entsprechend anzusteuern. Insbesondere kann durch ein dynamisches Kurvenlicht ein beleuchtetes Sichtfeld eines Fahrers während einer Kurvenfahrt vergrößert werden.

In einer Ausführungsform ist vorgesehen, dass die hochaufgelöste Lichtquelle dazu eingerichtet ist, in mindestens einem der Betriebszustände eine hochaufgelöste Projektion bereitzustellen, und das mindestens eine mit dem vorgegebenen Ausleuchtbereich der hochaufgelösten Lichtquelle überlappende Segment der Vorfeld-Lichtquelle dazu eingerichtet ist, im vorgenannten mindestens einen Betriebszustand gedimmt oder deaktiviert zu sein, wobei die mindestens eine Steuereinrichtung dazu eingerichtet ist, die Lichtquellen im vorgenannten mindestens einen Betriebszustand entsprechend anzusteuern. Dadurch kann ein Kontrast der hochaufgelösten Projektion erhöht werden.

In einer Ausführungsform ist vorgesehen, dass der erste Scheinwerfer ebenfalls eine Zeilen-Lichtquelle umfasst. Insbesondere kann dadurch eine Lichtstärke der Anordnung vergrößert werden.

Ferner wird insbesondere ein Fahrzeug geschaffen, umfassend mindestens eine Beleuchtungsanordnung nach einer der beschriebenen Ausführungsformen. Insbesondere ist das Fahrzeug ein Kraftfahrzeug, beispielsweise ein Personenkraftwagen oder ein Lastkraftwagen.

Weitere Merkmale zur Ausgestaltung des Verfahrens ergeben sich aus der Beschreibung von Ausgestaltungen der Beleuchtungsanordnung. Die Vorteile des Verfahrens sind hierbei jeweils die gleichen wie bei den Ausgestaltungen der Beleuchtungsanordnung.

Nachfolgend wird die Erfindung anhand bevorzugter Ausführungsbeispiele unter Bezugnahme auf die Figuren näher erläutert. Hierbei zeigen:
- Fig. 1: eine schematische Darstellung von Ausführungsformen der Beleuchtungsanordnung;
- Fig. 2: eine schematische Darstellung einer Ausführungsform der Beleuchtungsanordnung;
- Fig. 3: eine schematische Darstellung einer Ausführungsform der Beleuchtungsanordnung;
- Fig. 4: eine schematische Darstellung einer Ausführungsform der Beleuchtungsanordnung;
- Fig. 5: eine schematische Darstellung einer Ausführungsform der Beleuchtungsanordnung;
- Fig. 6: eine schematische Darstellung einer Ausführungsform der Beleuchtungsanordnung;
- Fig. 7: ein schematisches Ablaufdiagramm einer Ausführungsform des Verfahrens.

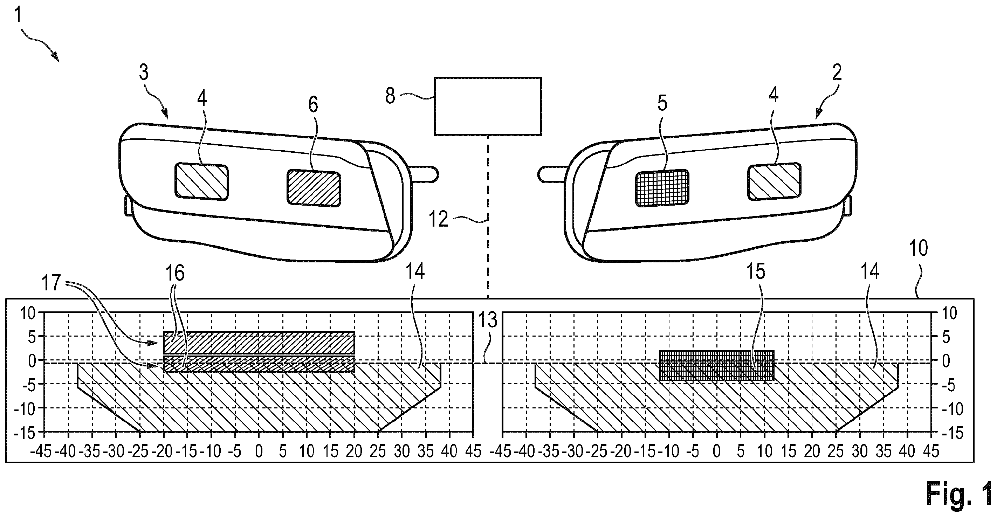

Die Fig. 1 zeigt eine schematische Darstellung von Ausführungsformen der Beleuchtungsanordnung 1. Im unteren Bereich der Fig. 1 ist eine Beleuchtungsverteilung 10 aus einer Perspektive der jeweiligen Scheinwerfer 2, 3 dargestellt, welche sich auf einer vertikalen Ebene vor dem jeweiligen Scheinwerfer 2, 3 ergibt, wobei die Ebene senkrecht zu einer Mittelebene 12 zwischen den Scheinwerfern 2, 3 steht. Mit anderen Worten ist für jeden Scheinwerfer 2, 3 eine Lichtverteilung dargestellt, wie sie auf einer Wand vor der Beleuchtungsanordnung abgebildet werden würde. Da eine Größe der Lichtverteilung in allen Richtungen mit einem Abstand zum Scheinwerfer 2, 3 skaliert, beschränkt sich die Darstellung auf Winkelangaben in Bezug auf die Mittelebene 12 und eine Horizontalebene (bei 0°), welche durch die Scheinwerfer 2, 3 verläuft.

Die Beleuchtungsanordnung 1 umfasst zwei Scheinwerfer 2, 3 und mindestens eine Steuereinrichtung 8. Ein erster der Scheinwerfer 2 umfasst eine hochaufgelöste Lichtquelle 5 und eine Vorfeld-Lichtquelle 4. Ein zweiter der Scheinwerfer 3 umfasst eine Zeilen-Lichtquelle 6 und eine Vorfeld-Lichtquelle 4. Die hochaufgelöste Lichtquelle 5 umfasst in einem Raster angeordnete, einzeln und/oder gruppenweise ansteuerbare Lichtpunkte. Die Zeilen-Lichtquelle 6 umfasst in mindestens einer Zeile angeordnete, einzeln und/oder gruppenweise ansteuerbare Lichtelemente. In der gezeigten Ausführungsform umfasst die Zeilen-Lichtquelle 6 des zweiten Scheinwerfers 3 zwei Zeilen.

Jede der Lichtquellen 4-6 ist dazu eingerichtet, einen vorgegebenen Ausleuchtbereich 14-17 zu beleuchten. Die Vorfeld-Lichtquellen 4 sind dazu eingerichtet, den Ausleuchtbereich eines Abblendlichts zu beleuchten. Die mindestens eine Steuereinrichtung 8 ist dazu eingerichtet, je nach einem Betriebszustand die Lichtquellen 4-6 und/oder Lichtpunkte und/oder Lichtelemente anzusteuern. Dadurch wird der jeweilige Ausleuchtbereich eines Abblendlichts und/oder eines Kurvenlichts und/oder eines Fernlichts beleuchtet und/oder eine hochaufgelöste Projektion wird bereitgestellt. Die hochaufgelöste Lichtquelle 5 und ihr Ausleuchtbereich 15 sind in kariert dargestellt, die einzelnen Rechtecke sind dabei allerdings nicht als einzelne Lichtpunkte und deren Ausleuchtbereiche zu interpretieren, da eine Anzahl an Lichtpunkten eine darstellbare Anzahl bei Weitem überschreitet. Insbesondere ist die Anzahl an Lichtpunkten groß genug, dass für ein menschliches Wahrnehmungsvermögen die entstehende Lichtverteilung benachbarter Lichtpunkte in einem Projektionsbild nicht unterscheidbar sind.

Insbesondere ist vorgesehen, dass der Ausleuchtbereich eines Abblendlichts unterhalb einer Hell-Dunkel-Grenze 13 liegt. Die Hell-Dunkel-Grenze 13 liegt im gezeigten Beispiel insbesondere 1° unterhalb der Horizontalebene. Insbesondere ist vorgesehen, dass der Ausleuchtbereich 14 der Vorfeld-Lichtquellen 4 an der Hell-Dunkel-Grenze 13 einen horizontalen Bereich umfasst, welcher sich von -38° bis +38° in Bezug auf eine Mittelebene 12 erstreckt. Ferner ist insbesondere vorgesehen, dass der Ausleuchtbereich 14 der Vorfeld-Lichtquellen 4 einen vertikalen Bereich umfasst, welcher sich von der Hell-Dunkel-Grenze 13 und bis -15° unterhalb der Horizontalebene erstreckt. Insbesondere ist vorgesehen, dass der Ausleuchtbereich 14 der Vorfeld-Lichtquellen 4 an einer unteren Seite abgewinkelt ist, sodass sich insbesondere eine sechseckige Form ergibt.

Insbesondere ist vorgesehen, dass der Ausleuchtbereich 16 der Zeilen-Lichtquelle 6 mindestens einen horizontalen Bereich umfasst, welcher sich von -20° bis +20° in Bezug auf die Mittelebene 12 erstreckt. In der gezeigten Ausführungsform umfasst der Ausleuchtbereich 16 der Zeilen-Lichtquelle 6 einen horizontalen Bereich, welcher sich von -30° bis +30° in Bezug auf die Mittelebene 12 erstreckt. Ferner ist insbesondere vorgesehen, dass ein Ausleuchtbereich einer der Zeilen der Zeilen-Lichtquelle 6 einen vertikalen Bereich umfasst, welcher sich von -2,5° bis 1° in Bezug auf die Horizontalebene (bei 0°) erstreckt. Insbesondere ist vorgesehen, dass ein Ausleuchtbereich 17 einer weiteren der Zeilen der Zeilen-Lichtquelle 6 einen vertikalen Bereich umfasst, welcher sich von -1,5° bis 6° in Bezug auf die Horizontalebene erstreckt.

Ferner ist insbesondere vorgesehen, dass der Ausleuchtbereich 15 der hochaufgelösten Lichtquelle 5 mindestens einen horizontalen Winkel von insgesamt 18°, bevorzugt insbesondere mindestens 24°, und einen vertikalen Bereich von insgesamt mindestens 6° umfasst. Bevorzugt erstreckt sich der vertikale Bereich des Ausleuchtbereichs 15 der hochaufgelösten Lichtquelle 5 von 4° unterhalb der Horizontalebene bis 2° oberhalb der Horizontalebene erstreckt.

In einer Ausführungsform ist ferner vorgesehen, dass der erste Scheinwerfer 2 ebenfalls eine Zeilen-Lichtquelle 6 umfasst.

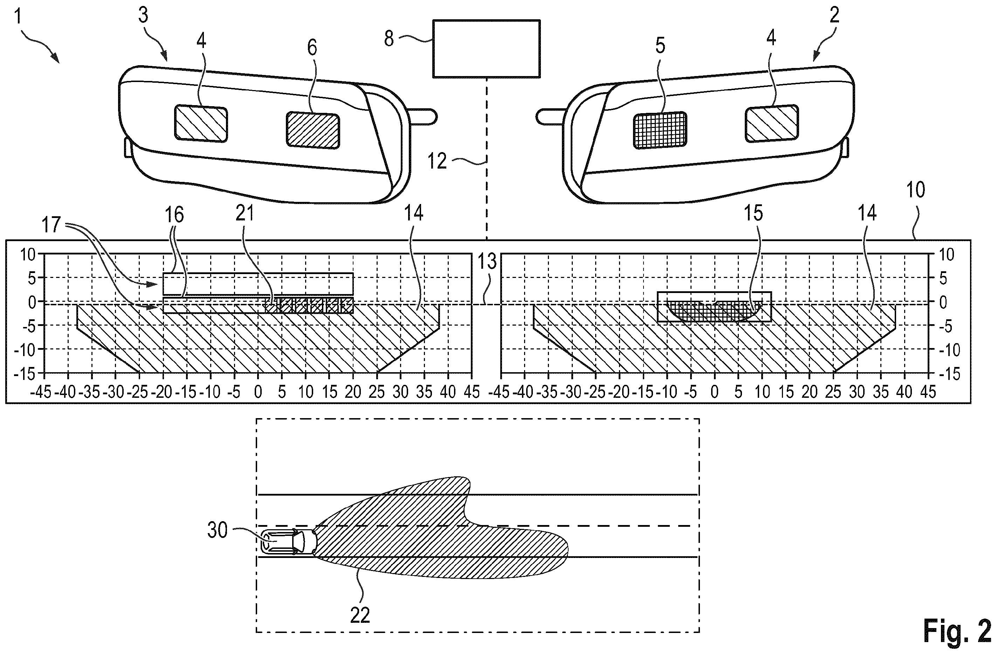

Die Fig. 2 zeigt eine schematische Darstellung einer Ausführungsform der Beleuchtungsanordnung 1. Die Ausführungsform ist grundsätzlich wie die in der Fig. 1 gezeigte Ausführungsform ausgebildet. Gleiche Bezugszeichen bezeichnen gleiche Merkmale und Begriffe. Gezeigt ist ein Betriebszustand, in dem ein Ausleuchtbereich 22 eines Abblendlichts beleuchtet wird. Dazu ist im unteren Bereich der Fig. 2 der Ausleuchtbereich 22 zusätzlich derart aus einer Draufsicht dargestellt, wie er auf einer vom Fahrzeug 30 befahrenen Straße ausgebildet wird. Insbesondere werden im dargestellten Betriebszustand die Lichtelemente der Zeilen-Lichtquelle 6, die Lichtpunkte der hochaufgelösten Lichtquelle 5 und die Vorfeld-Lichtquellen 4 derart durch die Steuereinheit 8 angesteuert, dass das erzeugte Licht in Summe einen vorgegebenen Ausleuchtbereich beleuchtet. Dazu wird insbesondere ein dem Straßenrand zugewandter Anteil der Lichtelemente einer Zeile der Zeilen-Lichtquelle 6 derart angesteuert, dass diese Lichtelemente aktiv sind. Insbesondere wird ein Anteil der Lichtelemente einer Zeile aktiviert, deren Ausleuchtbereich 21 zumindest teilweise unter einer Hell-Dunkel-Grenze 13 liegt. Insbesondere wird je nach Betriebszustand auch ein Anteil der Lichtpunkte der hochaufgelösten Lichtquelle 5 derart angesteuert, dass diese Lichtpunkte aktiv sind.

Im dargestellten Betriebszustand wird insbesondere eine Fahrspur, auf welcher sich das Fahrzeug 30 befindet, in einem größeren Abstand nach vorne beleuchtet als eine auf einer Fahrerseite angrenzende Fahrspur, insbesondere eine Gegenfahrbahn. Dazu werden insbesondere die Lichtelemente auf einer rechten Hälfte einer untersten Zeile der Zeilen-Lichtquelle 6 derart angesteuert, dass diese Lichtelemente aktiv sind. Ferner werden dazu insbesondere Lichtpunkte der hochaufgelösten Lichtquelle 5 derart angesteuert, dass der entsprechende Ausleuchtbereich 15 der hochaufgelösten Lichtquelle 5 an den horizontalen Seiten einen mit Bezug auf die Horizontalebene höhergelegenen Bereich umfasst als in der Mitte des Ausleuchtbereichs 15. Ferner liegt insbesondere eine Grenze des Ausleuchtbereichs 15 der hochaufgelösten Lichtquelle 5 auf einer Beifahrerseite mit Bezug auf die Horizontalebene höher als auf einer Fahrerseite. Insbesondere ist vorgesehen, dass die Grenze des Ausleuchtbereichs 15 der hochaufgelösten Lichtquelle 5 von der Mitte aus zu den Seiten hin mit einem Winkel von 15°-19° ansteigt.

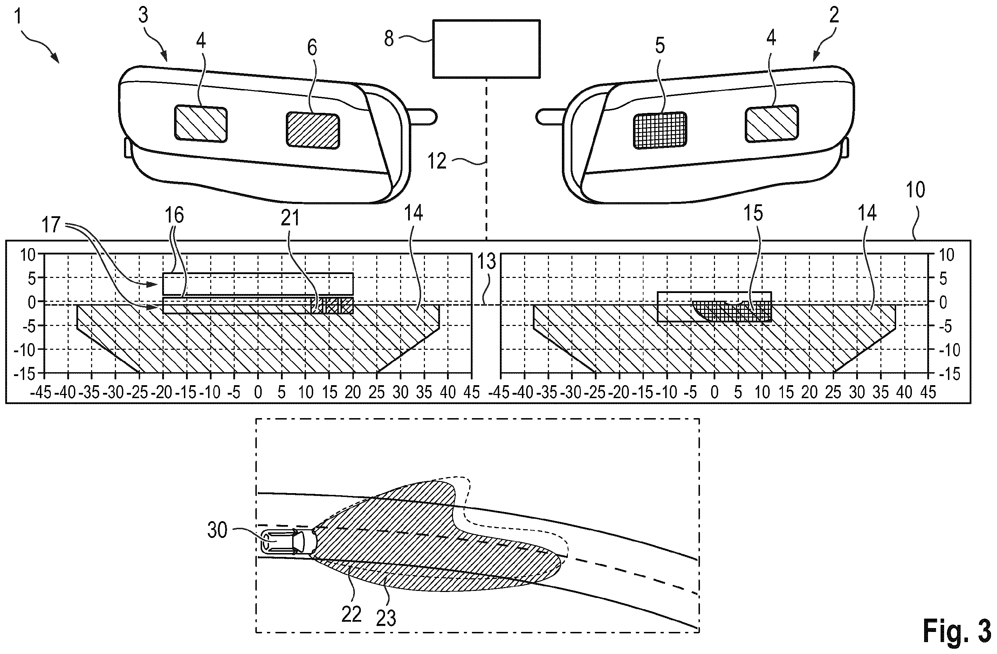

Die Fig. 3 zeigt eine schematische Darstellung einer Ausführungsform der Beleuchtungsanordnung 1. Die Ausführungsform ist grundsätzlich wie die in der Fig. 2 gezeigte Ausführungsform ausgebildet. Gleiche Bezugszeichen bezeichnen gleiche Merkmale und Begriffe. Gezeigt ist ein Betriebszustand, in dem ein Ausleuchtbereich 23 eines Kurvenlichts beleuchtet wird. Die angesteuerten aktiven Lichtelemente der Zeilen-Lichtquelle 6 und die angesteuerten aktiven Lichtpunkte der hochaufgelösten Lichtquelle 5 sind im Vergleich zum Betriebszustand, welcher in Fig. 2 dargestellt ist, in Richtung einer Kurvenkrümmung verschoben. Dadurch wird das Beleuchten des Ausleuchtbereichs 23 des Kurvenlichts ermöglicht. Insbesondere ist durch ein sukzessives Ändern der angesteuerten Lichtpunkte und/oder Lichtelemente ein kontinuierliches Verschieben des Ausleuchtbereichs 23 möglich. Insbesondere wird dadurch auch das Bereitstellen eines dynamischen Kurvenlichts ermöglicht.

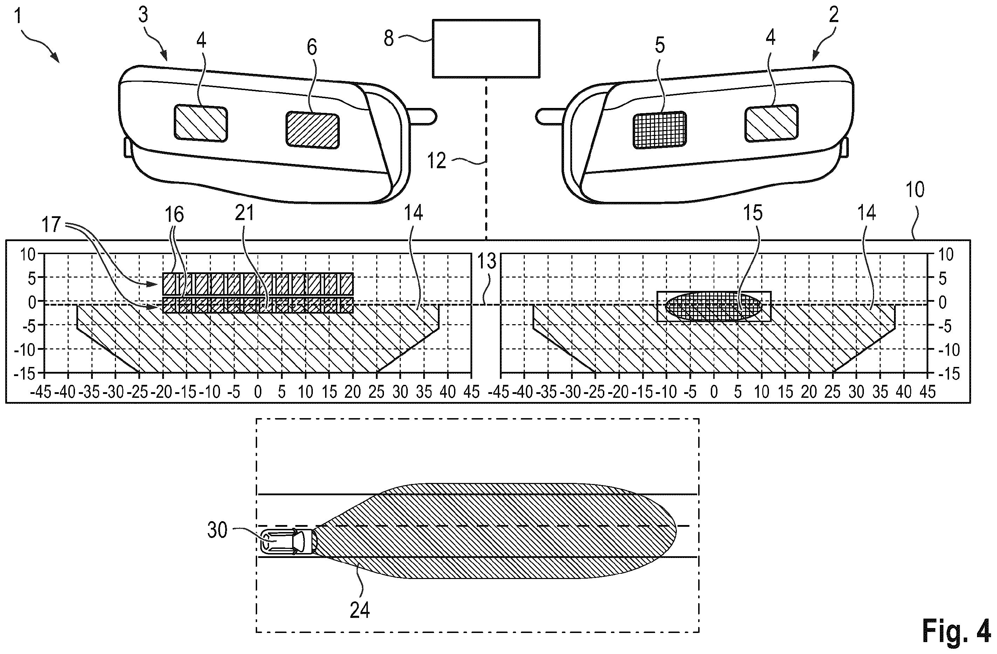

Die Fig. 4 zeigt eine schematische Darstellung einer Ausführungsform der Beleuchtungsanordnung 1. Die Ausführungsform ist grundsätzlich wie die in der Fig. 2 gezeigte Ausführungsform ausgebildet. Gleiche Bezugszeichen bezeichnen gleiche Merkmale und Begriffe. Gezeigt ist ein Betriebszustand, in dem ein Ausleuchtbereich 24 eines Fernlichts beleuchtet wird. Insbesondere werden im gezeigten Betriebszustand alle oder ein Großteil der Lichtelemente der Zeilen-Lichtquelle 6 derart angesteuert, dass diese Lichtelemente aktiv sind. Insbesondere werden ferner im Zentrum der hochaufgelösten Lichtquelle 5 liegende Lichtpunkte und/oder im Zentrum der Zeilen-Lichtquelle 6 liegende Lichtelemente derart angesteuert, dass diese Lichtpunkte aktiv sind. Dadurch wird insbesondere das Beleuchten eines zentralen Bereichs vor dem Fahrzeug 30 ermöglicht. Insbesondere werden dabei auch Lichtpunkte und/oder Lichtelemente, deren jeweilige Ausleuchtbereiche zumindest teilweise oberhalb der Hell-Dunkel-Grenze 13 liegen, derart angesteuert, dass diese Lichtpunkte und/oder Lichtelemente aktiv sind.

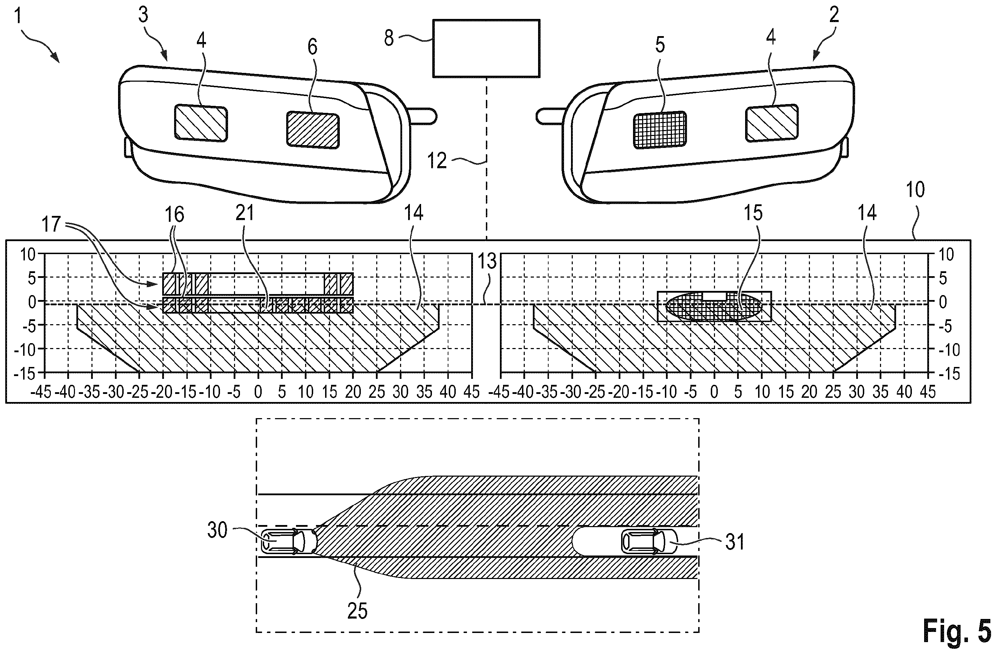

Die Fig. 5 zeigt eine schematische Darstellung einer Ausführungsform der Beleuchtungsanordnung 1. Die Ausführungsform ist grundsätzlich wie die in der Fig. 2 gezeigte Ausführungsform ausgebildet. Gleiche Bezugszeichen bezeichnen gleiche Merkmale und Begriffe. Gezeigt ist ein Betriebszustand, in dem ein Ausleuchtbereich 25 eines maskierten Fernlichts beleuchtet wird. Im Vergleich zum Betriebszustand, welcher in Fig. 4 dargestellt ist, werden diejenigen Lichtelemente und/oder Lichtpunkte, deren Ausleuchtbereich mit einem nicht zu beleuchtenden Bereich überlappt, derart angesteuert, dass diese Lichtelemente nicht aktiv sind. Insbesondere werden die Lichtelemente und/oder Lichtpunkte derart angesteuert, dass der vorgegebene Ausleuchtbereich 25 des maskierten Fernlichts nicht mit anderen Verkehrsteilnehmern überlappt. Mit anderen Worten: Ein Raumwinkel, in dem sich ein anderer Verkehrsteilnehmer 31 befindet, wird maskiert, indem die jeweils hiermit korrespondierenden Lichtelemente und/oder Lichtpunkte deaktiviert werden. Auf diese Weise wird ein Aussparen von anderen Verkehrsteilnehmern 31 aus dem Fernlicht ermöglicht. Insbesondere kann dadurch ein Blenden des anderen Verkehrsteilnehmers 31 verhindert werden.

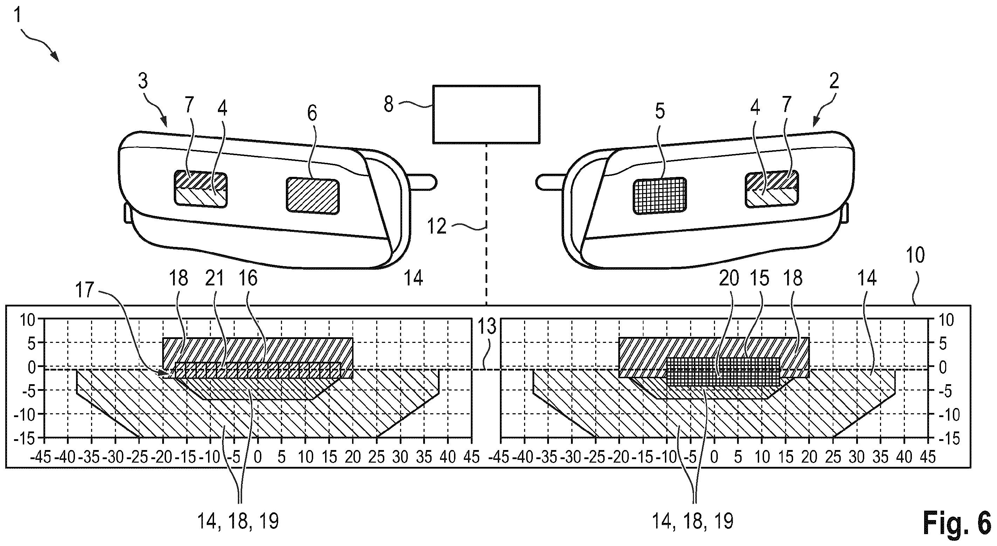

Die Fig. 6 zeigt eine schematische Darstellung einer Ausführungsform der Beleuchtungsanordnung 1. Die Ausführungsform ist grundsätzlich wie die in der Fig. 1 gezeigte Ausführungsform ausgebildet. Gleiche Bezugszeichen bezeichnen gleiche Merkmale und Begriffe. In der gezeigten Ausführungsform umfasst jeder der Scheinwerfer 2, 3 ein Kombinationsmodul 7. Jedes Kombinationsmodul 7 umfasst je eine der Vorfeld-Lichtquellen 4. Das Kombinationsmodul 7 ist ferner dazu eingerichtet, einen Ausleuchtbereich 18 zu beleuchten. Dadurch ist es möglich, einen Ausleuchtbereich eines Fernlichts durch das Kombinationsmodul 7 zu beleuchten.

Es kann insbesondere vorgesehen sein, dass die hochaufgelöste Lichtquelle 5 und/oder die Zeilen-Lichtquelle 6 derart angeordnet sind, dass eine Lichtverteilung, welche durch ein Aktivieren aller Lichtpunkte und/oder aller Lichtelemente entsteht, in einem vorgegebenen horizontalen Auftreffbereich des Lichts symmetrisch in Bezug auf eine Mittelebene 12 zwischen den Scheinwerfern 2, 3 ist. Insbesondere sind die hochaufgelöste Lichtquelle 5 und/oder die Zeilen-Lichtquelle 6 horizontal gegen die Mittelebene 12 verdreht angeordnet. Bei der in Fig. 6 gezeigten Ausführungsform ist die hochaufgelöste Lichtquelle 5 so verdreht, dass ein Raumwinkel des Ausleuchtbereichs 15 der hochaufgelösten Lichtquelle 5 asymmetrisch gegenüber der Mittelebene 12 ist. Beispielsweise kann die hochaufgelöste Lichtquelle 6 um 2° gegen die Mittelebene 12 verdreht angeordnet sein. Dadurch wird insbesondere ein horizontaler Bereich belichtet, welcher sich von -10° bis +12° in Bezug auf die Mittelebene 12 erstreckt. Dadurch wird insbesondere eine Symmetrie der Lichtverteilung zur Mittelebene 12 in einem vorgegebenen Auftreffbereich des Lichts ermöglicht, obwohl die Scheinwerfer 2, 3 und/oder die Lichtquellen 4-7 in einem Abstand zur Mittelebene 12 angeordnet sind.

In der gezeigten Ausführungsform ist ausschließlich die hochaufgelöste Lichtquelle 5 derart angeordnet, dass ihr Ausleuchtbereich 15 asymmetrisch in Bezug auf eine Hauptbeleuchtungsrichtung (bei 0° der Abszisse) ist. Es kann auch vorgesehen sein, dass mindestens eine der übrigen Lichtquellen 4-7 derart angeordnet sind, dass ihr jeweiliger Ausleuchtbereich 14-17 asymmetrisch in Bezug auf eine Hauptbeleuchtungsrichtung (bei 0° der Abszisse) ist. Insbesondere kann auch nur ein Teil der Zeilen der Zeilen-Lichtquelle 6 auf diese Weise angeordnet sein. Insbesondere kann dadurch eine Lichtverteilung, welche durch ein Aktivieren aller Lichtpunkte oder aller Lichtelemente der jeweiligen Lichtquelle 4-7 oder der jeweiligen Zeile entsteht, in einem vorgegebenen horizontalen Auftreffbereich des Lichts symmetrisch in Bezug auf eine Mittelebene 12 zwischen den Scheinwerfern 2, 3 sein.

Es kann insbesondere vorgesehen sein, dass mindestens eine der Vorfeld-Lichtquellen 4 einzeln und/oder gruppenweise ansteuerbare Segmente umfasst, wobei der vorgegebene Ausleuchtbereich 19 mindestens eines der Segmente mit dem vorgegebenen Ausleuchtbereich 15 der hochaufgelösten Lichtquelle 5 überlappt.

Ferner sind schematisch die Ausleuchtbereiche 20 einzelner Lichtpunkte der hochaufgelösten Lichtquelle 5 dargestellt. Insbesondere wird durch einzelnes oder gruppenweises Aktivieren oder Deaktivieren der Lichtpunkte ein Maskieren einer Lichtfunktion ermöglicht und/oder eine hochaufgelöste Projektion wird bereitgestellt.

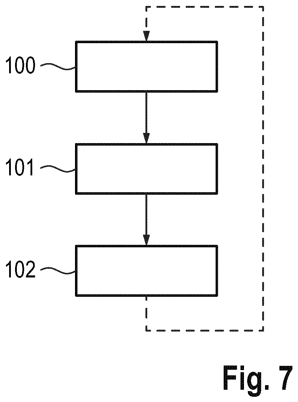

Die Fig. 7 zeigt ein schematisches Ablaufdiagramm einer Ausführungsform des Verfahrens. In einem Verfahrensschritt 100 wird ein Betriebszustand vorgegeben, beispielsweise von einer Fahrzeugsteuerung. In einem Verfahrensschritt 101 werden die Lichtquellen und/oder die Lichtpunkte und/oder die Lichtelemente gemäß dem Betriebszustand einzeln und/oder gruppenweise mittels der mindestens einen Steuereinrichtung angesteuert. Dadurch wird in einem Verfahrensschritt 102 ein vorgegebener Ausleuchtbereich beleuchtet und/oder eine hochaufgelöste Projektion bereitgestellt. Der vorgegebene Ausleuchtbereich kann dabei den jeweiligen Ausleuchtbereich eines Abblendlichts und/oder eines Kurvenlichts und/oder eines Fernlichts umfassen und/oder mit diesem überlappen. Ferner kann ein maskiertes Fernlicht und/oder eine hochaufgelöste Projektion bereitgestellt werden. Der Prozess wird anschließend erneut durchlaufen. Gegebenenfalls kann dabei ein geänderter Betriebszustand vorgegeben werden, sodass sich auch die Ansteuerung der Lichtquellen und/oder der Lichtpunkte und/oder der Lichtelemente und damit gegebenenfalls auch die entstehende Lichtverteilung ändern.

### Bezugszeichenliste

- 1: Beleuchtungsanordnung
- 2: erster Scheinwerfer
- 3: zweiter Scheinwerfer
- 4: Vorfeld-Lichtquelle
- 5: hochaufgelöste Lichtquelle
- 6: Zeilen-Lichtquelle
- 7: Kombinationsmodul
- 8: Steuereinrichtung
- 10: Beleuchtungsverteilung
- 12: Mittelebene
- 13: Hell-Dunkel-Grenze
- 14: Ausleuchtbereich (der Vorfeld-Lichtquelle)
- 15: Ausleuchtbereich (der hochaufgelösten Lichtquelle)
- 16: Ausleuchtbereich (der Zeilen-Lichtquelle)
- 17: Ausleuchtbereich (einer Zeile der Zeilen-Lichtquelle)
- 18: Ausleuchtbereich (des Kombinationsmoduls)
- 19: Ausleuchtbereich (eines Segments der Vorfeld-Lichtquelle)
- 20: Ausleuchtbereich (eines Lichtpunkts)
- 21: Ausleuchtbereich (eines Lichtelements)
- 22: Ausleuchtbereich (eines Abblendlichts)
- 23: Ausleuchtbereich (eines Kurvenlichts)
- 24: Ausleuchtbereich (eines Fernlichts)
- 25: Ausleuchtbereich (eines maskierten Fernlichts)
- 30: Fahrzeug
- 100-102: Prozessschritte

## Patentansprüche

1. Beleuchtungsanordnung (1) für ein Fahrzeug (30), umfassend:
- zwei Scheinwerfer (2, 3) und mindestens eine Steuereinrichtung (8),
- wobei ein erster der Scheinwerfer (2) eine Vorfeld-Lichtquelle (4) und eine hochaufgelöste Lichtquelle (5) umfasst,
- wobei ein zweiter der Scheinwerfer (3) eine Vorfeld-Lichtquelle (4) und eine Zeilen-Lichtquelle (6) umfasst,
- wobei jede der Lichtquellen (4-7) dazu eingerichtet ist, einen jeweils vorgegebenen Ausleuchtbereich (14-21) vor der Beleuchtungsanordnung (1) zu beleuchten,
- wobei die hochaufgelöste Lichtquelle (5) in einem Raster angeordnete, einzeln und/oder gruppenweise ansteuerbare Lichtpunkte umfasst,
- wobei die Zeilen-Lichtquelle (6) in mindestens einer Zeile angeordnete, einzeln und/oder gruppenweise ansteuerbare Lichtelemente umfasst,
- wobei die Vorfeld-Lichtquellen (4) dazu eingerichtet sind, den Ausleuchtbereich eines Abblendlichts (22) zu beleuchten,
- wobei die mindestens eine Steuereinrichtung (8) dazu eingerichtet ist, je nach einem Betriebszustand die Lichtquellen (4-7) und/oder Lichtpunkte und/oder Lichtelemente derart anzusteuern, dass der jeweilige Ausleuchtbereich eines Abblendlichts (22)
und/oder eines Kurvenlichts (23) und/oder eines Fernlichts (24) beleuchtet wird und/oder eine hochaufgelöste Projektion bereitgestellt wird.

2. Beleuchtungsanordnung (1) nach Anspruch 1, **dadurch gekennzeichnet, dass** die Zeilen-Lichtquelle (6) des zweiten Scheinwerfers (3) zwei Zeilen umfasst.

3. Beleuchtungsanordnung (1) nach Anspruch 1 oder 2, **dadurch gekennzeichnet, dass** mindestens einer der Scheinwerfer (2, 3) ein Kombinationsmodul (7) umfasst, welches die Vorfeld-Lichtquelle (4) umfasst und welches ferner dazu eingerichtet ist, einen Ausleuchtbereich eines Fernlichts (24) zu beleuchten.

4. Beleuchtungsanordnung (1) nach einem der vorangegangenen Ansprüche, **dadurch gekennzeichnet, dass** die hochaufgelöste Lichtquelle (5) und/oder die Zeilen-Lichtquelle (6) derart angeordnet sind, dass eine Lichtverteilung, welche durch ein Aktivieren aller Lichtpunkte und/oder aller Lichtelemente entsteht, in einem vorgegebenen horizontalen Auftreffbereich des Lichts symmetrisch in Bezug auf eine Mittelebene (12) zwischen den Scheinwerfern (2, 3) ist.

5. Beleuchtungsanordnung (1) nach einem der vorangegangenen Ansprüche, **dadurch gekennzeichnet, dass** mindestens eine der Vorfeld-Lichtquellen (5) einzeln und/oder gruppenweise ansteuerbare Segmente umfasst, wobei der vorgegebene Ausleuchtbereich (19) mindestens eines der Segmente mit dem vorgegebenen Ausleuchtbereich (15) der hochaufgelösten Lichtquelle (5) überlappt.

6. Beleuchtungsanordnung (1) nach einem der vorangegangenen Ansprüche, **dadurch gekennzeichnet, dass** die hochaufgelöste Lichtquelle (5) und mindestens eine der Zeilen der Zeilen-Lichtquelle (6) und/oder das Kombinationsmodul (7) dazu eingerichtet sind, in mindestens einem der Betriebszustände zusammen ein bereichsweise maskiertes oder maskierbares Fernlicht bereitzustellen, wobei die mindestens eine Steuereinrichtung (8) dazu eingerichtet ist, die Lichtquellen (4-7) im vorgenannten mindestens einen Betriebszustand entsprechend anzusteuern.

7. Beleuchtungsanordnung (1) nach einem der vorangegangenen Ansprüche, **dadurch gekennzeichnet, dass** die hochaufgelöste Lichtquelle (5) und mindestens eine der Zeilen der Zeilen-Lichtquelle (6) dazu eingerichtet sind, in mindestens einem der Betriebszustände ein dynamisches Kurvenlicht bereitzustellen, wobei die mindestens eine Steuereinrichtung (8) dazu eingerichtet ist, die Lichtquellen (4-7) im vorgenannten mindestens einen Betriebszustand entsprechend anzusteuern.

8. Beleuchtungsanordnung (1) nach einem der Ansprüche 5 bis 8, **dadurch gekennzeichnet, dass** die hochaufgelöste Lichtquelle (5) dazu eingerichtet ist, in mindestens einem der Betriebszustände eine hochaufgelöste Projektion bereitzustellen, und das mindestens eine mit dem vorgegebenen Ausleuchtbereich (15) der hochaufgelösten Lichtquelle überlappende Segment der Vorfeld-Lichtquelle (4) dazu eingerichtet ist, im vorgenannten mindestens einen Betriebszustand gedimmt oder deaktiviert zu sein, wobei die mindestens eine Steuereinrichtung (8) dazu eingerichtet ist, die Lichtquellen (4-7) im vorgenannten mindestens einen Betriebszustand entsprechend anzusteuern.

9. Beleuchtungsanordnung (1) nach einem der vorangegangenen Ansprüche, **dadurch gekennzeichnet, dass** der erste Scheinwerfer (2) ebenfalls eine Zeilen-Lichtquelle (6) umfasst.

10. Fahrzeug (30), umfassend mindestens eine Beleuchtungsanordnung (1) nach einem der vorangegangenen Ansprüche.

11. Verfahren zum Betreiben einer Beleuchtungsanordnung (1) für ein Fahrzeug (30), umfassend:
- Betreiben von zwei Scheinwerfern (2, 3) mittels mindestens einer Steuereinrichtung (8), wobei ein erster der Scheinwerfer (2) eine Vorfeld-Lichtquelle (4) und eine hochaufgelöste Lichtquelle (5) mit in einem Raster angeordneten Lichtpunkten umfasst und wobei ein zweiter der Scheinwerfer (3) eine Vorfeld-Lichtquelle (4) und eine Zeilen-Lichtquelle (6) mit in mindestens einer Zeile angeordneten Lichtelementen umfasst,
- wobei jede der Lichtquellen (4-7) dazu eingerichtet ist, einen jeweils vorgegebenen Ausleuchtbereich (14-21) vor dem Fahrzeug (30) zu beleuchten,
- wobei die Lichtquellen (4-7) und/oder die Lichtpunkte und/oder die Lichtelemente je nach einem Betriebszustand einzeln und/oder gruppenweise angesteuert werden, sodass der jeweilige Ausleuchtbereich eines Abblendlichts (22) und/oder eines Kurvenlichts (23)
und/oder eines Fernlichts (24) beleuchtet wird und/oder eine hochaufgelöste Projektion bereitgestellt wird.
